# DEMANDE DE BREVET EUROPEEN

(11) **EP 1 962 060 A1**
(43) Date de publication de la demande: **27.08.2008**
(21) Numéro de dépôt: 07300940.9
(22) Date de dépôt: 06.04.2007
(51) Int. Cl.: G01D 4/00

(54) **Procede de liaison pour tele-releve de compteurs**

(30) Priorité: 22.02.2007 EP 07300812
(71) Demandeur: Actaris SAS, 92100 Boulogne Billancourt (FR)
(72) Inventeur: Rigomier, Vincent, 71118 Saint Martin Belle Roche (FR)
(74) Mandataire: Hervouet, Sylvie

(57) **Abrégé**

L'invention concerne un procédé de liaison pour télé - relevé de compteurs selon lequel des modules (40-44) connectés à des compteurs communiquent par ondes radiofréquences de façon unidirectionnelle avec un ordinateur central (48) par l'intermédiaire de concentrateurs (45, 46). Selon l'invention, en plus de la communication unidirectionnelle, une liaison bidirectionnelle entre l'ordinateur, les concentrateurs et les modules est utilisée occasionnellement.

Application au télé-relevé de compteurs d'eau.

## Description

La présente invention concerne un procédé de liaison pour le télé-relevé de compteurs d'eau, de gaz, d'énergie thermique ou d'électricité, ces compteurs pouvant être des compteurs domestiques ou industriels associés chacun à un module de communication par ondes radiofréquence.

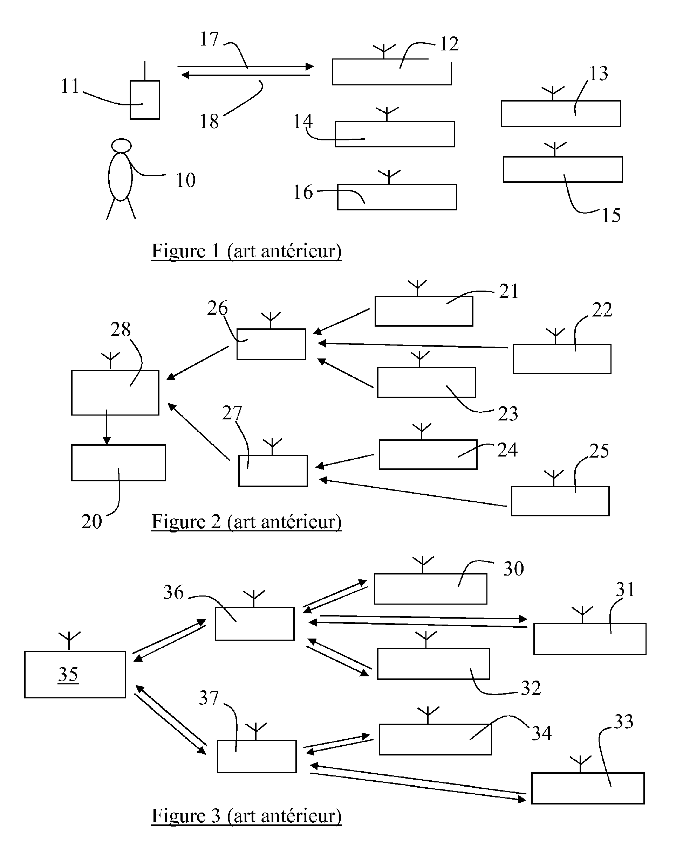

Il existe plusieurs types de télé-relevé de compteurs par radio fréquence :
- Le télé-relevé appelé « walk by » qui est illustré sur la figure 1: une personne 10, appelée le releveur, se déplace à pieds (d'où la dénomination "walk by" en anglais) et dispose d'un ordinateur ou terminal portable 11 muni d'une interface radio. Quand il passe à proximité d'un compteur ou d'un groupe de compteurs 12, 13, 14, 15 et 16 comportant chacun un module de communication radio, il les interroge à l'aide de son terminal 11 en envoyant un signal d'interrogation 17, ordonnant à ce ou ces compteur(s) d'envoyer leurs données. La distance entre le releveur et le compteur est rarement supérieure à une centaine de mètres. Le signal d'interrogation 17 est envoyé aux compteurs se trouvant dans la zone de couverture du signal de réveil et les compteurs répondent en envoyant un signal de réponse 18 à l'ordinateur. La communication radio entre les modules des compteurs et l'ordinateur portable est bidirectionnelle, c'est-à-dire qu'elle peut être établie dans le sens du module vers l'ordinateur et inversement.
- Le télé-relevé appelé « drive by » : le système est proche du « walk by » mais dans ce cas le releveur se déplace à l'aide d'un véhicule.
- Le télé-relevé appelé « réseau fixe » standard (« fixed network » en anglais) illustré sur la figure 2 : soit le releveur (non représenté) agit de son bureau, soit le système effectue automatiquement le télé-relevé via le système informatique qui comporte un ordinateur 20. Les compteurs équipés de modules de communication radio 21, 22, 23, 24 et 25 ne communiquent généralement pas directement avec l'ordinateur mais par l'intermédiaire de concentrateurs ou relais intermédiaires 26 et 27, chaque concentrateur enregistrant périodiquement les données de consommation d'un groupe de compteurs. Ainsi, sur la figure 2 les modules des compteurs 21, 22 et 23 communiquent avec le concentrateur intermédiaire 26 et les modules des compteurs 24 et 25 communiquent avec le concentrateur intermédiaire 27. Les modules émettent à un moment donné déterminé de façon aléatoire ou à un moment configuré dans leurs mémoires. Les concentrateurs intermédiaires 26 et 27 communiquent avec un concentrateur principal 28, lequel communique avec l'ordinateur central 20 situé dans un bureau de l'opérateur du réseau. Les transmissions radio dans ce type de télé-relevé à réseau fixe sont unidirectionnelles selon le sens des flèches indiquées sur la figure 2 (des modules vers le concentrateur principal en passant par les concentrateurs intermédiaires). Le réseau est généralement complexe, souvent constitué d'une ligne filaire (téléphonique ou fibres optiques) reliant le concentrateur principal 28 à l'ordinateur central 20 et de liaisons radio unidirectionnelles des concentrateurs intermédiaires 26 et 27 vers le concentrateur principal 28 et des modules 21 à 25 des compteurs vers les concentrateurs intermédiaires.

Une variante de réalisation d'un réseau fixe est représentée sur la figure 3. Selon cette variante de réalisation, dite réseau fixe « walk-by », les modules de radio communication 30, 31, 32, 33 et 34 des compteurs sont lus un par un par radio à partir du concentrateur principal 35, par l'intermédiaire des concentrateurs intermédiaires 36 et 37. Les transmissions radio sont dans ce cas bidirectionnelles, comme indiquées sur la figure 3 par les liaisons à doubles flèches.

Les réseaux fixes standard à fonctionnement unidirectionnel présentent l'avantage d'une faible consommation en énergie électrique des modules, comparée à celle d'un système bidirectionnel. Cette faible consommation permet une longue durée de vie des piles électriques équipant les modules, de l'ordre de dix années ou plus. Le remplacement fréquent des piles est un inconvénient sérieux puisqu'une personne doit se rendre au domicile où se trouve le compteur pour effectuer le changement de pile, ce qui coûte en main d'oeuvre. De plus, l'accès au compteur peut être compliqué (absences fréquentes des propriétaires, environnement hostile, ...). Les systèmes à réseau fixe ont donc la faveur des opérateurs.

Cependant, le fonctionnement unidirectionnel des réseaux fixes présente l'inconvénient de ne pas pouvoir accéder aux modules à distance, par exemple pour des fonctions de maintenance (vérification d'alarmes, récupération des informations non transmises périodiquement, ...) ou pour réorganiser le réseau (par exemple, rediriger un module sur un autre relais ou un autre concentrateur). Il est nécessaire d'envoyer un spécialiste sur place pour effectuer ces opérations.

L'objectif de la présente invention est de mettre en oeuvre un réseau de télé relevé qui donne accès aux modules de communication de façon occasionnelle tout en assurant une périodicité de lecture rapprochée des modules (par exemple de une à trois fois par jour).

L'invention consiste à utiliser un réseau fixe avec des liaisons unidirectionnelles pour les transmissions périodiques, tout en procurant un fonctionnement bidirectionnel qui peut être utilisé pour accéder occasionnellement aux modules via le réseau, par exemple afin d'assurer la maintenance à distance et/ou la lecture de données non transmises par le réseau unidirectionnel,...).

De façon plus précise, l'invention concerne un procédé de liaison pour télé-relevé de compteurs selon lequel des modules connectés à des compteurs communiquent par ondes radiofréquences de façon unidirectionnelle avec un ordinateur central par l'intermédiaire de concentrateurs. Selon l'invention, en plus de la communication unidirectionnelle, une liaison bidirectionnelle entre l'ordinateur, les concentrateurs et les modules est utilisée occasionnellement.

Selon un mode de réalisation avantageux, la communication unidirectionnelle est programmée à des périodes fixes prédéterminées et la communication bidirectionnelle est établie en dehors de ces périodes fixes prédéterminées. Les modules peuvent se positionner en position d'écoute en dehors de ces périodes fixes prédéterminées.

La communication bidirectionnelle entre les modules et les concentrateurs peut être effectuée dans une première bande de fréquence et la communication bidirectionnelle entre les concentrateurs et l'ordinateur peut être effectuée dans une deuxième bande de fréquence différente de la première bande de fréquence.

Par exemples :
- la première bande de fréquence est centrée autour de 433 MHz et la deuxième bande de fréquence est centrée autour de 868 MHz ou autour de 169 MHz.
- la première bande de fréquence est centrée autour de 868 MHz et la deuxième bande de fréquence est centrée autour de 169 MHz ou autour de 433 MHz.

La communication bidirectionnelle peut être utilisée principalement pour des opérations de maintenance.

L'ordinateur central peut être un ordinateur fixe pour les communications unidirectionnelle et bidirectionnelle. Alternativement, l'ordinateur central peut être un ordinateur fixe pour la communication unidirectionnelle et un ordinateur mobile pour la communication bidirectionnelle.

D'autres avantages et caractéristiques de l'invention apparaîtront au cours de la description qui suit de deux modes de fonctionnement de l'invention, donnés à titre d'exemples non limitatifs, en référence aux dessins annexés et sur lesquels :
- la figure 1 représente schématiquement un système de télé-relevé du type « walk-by » de l'art antérieur,
- la figure 2 représente schématiquement un système de télé-relevé du type réseau fixe standard de l'art antérieur,
- la figure 3 représente schématiquement un système de télé-relevé du type réseau fixe « walk-by » de l'art antérieur,
- les figures 4 et 5 représentent schématiquement deux modes de fonctionnement du réseau selon l'invention.

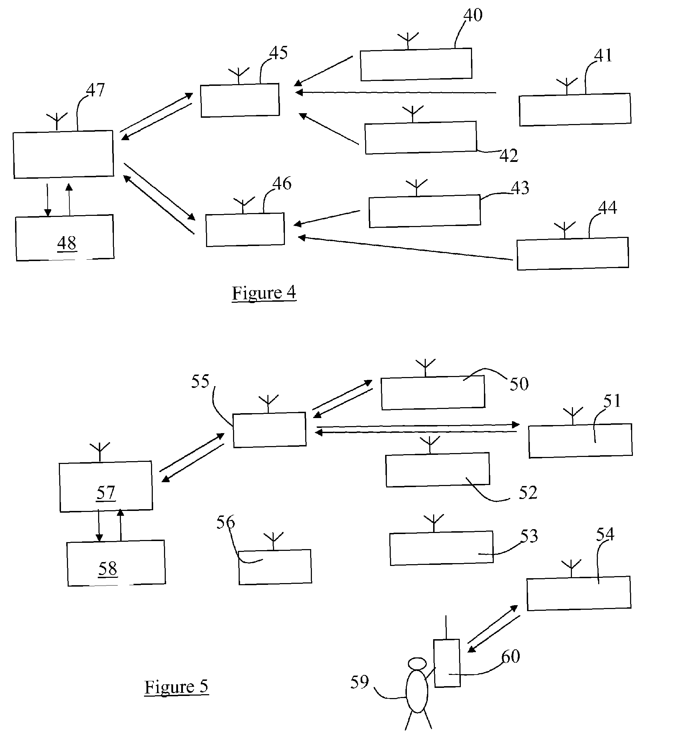

Sur la figure 4, le réseau comporte des modules de communication radio 40, 41, 42, 43 et 44, chaque module étant associé à un compteur. Les données de consommations mesurées par les compteurs sont enregistrées dans les modules. Des concentrateurs ou relais intermédiaires communiquent de façon unidirectionnelle avec les modules radio. Ainsi les modules 40, 41 et 42 communiquent par radio avec un concentrateur intermédiaire 45 pour envoyer leurs données, lesquelles sont stockées dans le concentrateur 45 et les modules 43 et 44 communiquent par radio avec le concentrateur intermédiaire 46 qui stocke les données des modules radio 43 et 44. Les concentrateurs intermédiaires 45 et 46 sont reliés par radio, de façon bidirectionnelle, avec un concentrateur principal 47, lequel est relié à un ordinateur central 48 situé dans les bureaux de l'opérateur du réseau. La liaison bidirectionnelle entre l'ordinateur central 48 et le concentrateur principal 47 peut être réalisée par cable (fils électriques ou fibres optiques) ou par radio, par exemple du type GPRS (« General Packet Radio Service »), qui est une norme de téléphone mobile dérivée du GSM.

Selon un autre mode de réalisation, la liaison radio entre les concentrateurs intermédiaires 45 et 46 et le concentrateur principal est une liaison unidirectionnelle.

En fonctionnement unidirectionnel des modules 40-44, illustré sur la figure 4, les modules radio associés aux compteurs émettent leurs données à un instant qui peut être choisi, par exemple, de façon aléatoire à l'aide d'un algorithme embarqué dans les circuits logiques des modules ou à un instant choisi de façon fixe prédéterminée. La communication radio est unidirectionnelle comme représentée sur la figure 4 par des flèches à sens unique, des modules vers les concentrateurs intermédiaires 45 et 46. Ces derniers et le concentrateur principal 47 peuvent communiquer entre eux de façon bidirectionnelle comme montrée sur la figure 4 par des doubles flèches, ou de façon unidirectionnelle.

La figure 5 illustre un mode de fonctionnement où il est possible de relever un ou plusieurs compteurs en mode « walk by » bidirectionnel avec le réseau fixe ou par un opérateur sur le terrain. Les modules radio 50, 51 et 52 peuvent communiquer de façon bidirectionnelle avec le concentrateur intermédiaire 55 et les modules 53 et 54 peuvent communiquer de façon bidirectionnelle avec le concentrateur intermédiaire 56. Les concentrateurs intermédiaires 55 et 56 communiquent de façon bidirectionnelle avec le concentrateur principal 57, lequel communique avec un ordinateur central 58. Seules les liaisons bidirectionnelles des modules 50 et 51 avec le concentrateur intermédiaire 55 et entre le concentrateur intermédiaire 55 et le concentrateur principal 57 sont illustrées (par des doubles flèches) sur la figure 5.

Les données des compteurs sont communiquées à un ordinateur central 58 de façon bidirectionnelle. Comme déjà indiqué, les modules radio émettent leurs données à un instant choisi par exemple de façon aléatoire ou choisi de façon fixe prédéterminée. Ces communications radio, qui se produisent généralement plusieurs fois par tranche de 24 heures, sont unidirectionnelles. En dehors de ces périodes pendant lesquelles les modules transfèrent leurs données aux concentrateurs, le réseau peut fonctionner en mode bidirectionnel. Les modules (50-54) peuvent se positionner en position d'écoute en dehors desdites périodes de communication unidirectionnelle.

C'est ce qui est illustré sur la figure 5 où les communications radio entre le concentrateur 55 et les modules 50 et 51 sont bidirectionnelles.

Il est également possible de communiquer avec les modules en mode « walk-by ». Un agent 59 muni d'un terminal ou ordinateur portable 60 peut dialoguer de façon bidirectionnelle avec les modules de compteurs, par exemple le module 54 sur la figure 5.

En fonctionnement bidirectionnel, pour éviter que les concentrateurs intermédiaires, utilisés en relayeur d'informations, réveillent inutilement les modules qui sont placés dans leur environnement proche, les modules et les concentrateurs intermédiaires communiquent de préférence sur deux bandes de fréquences différentes.
Exemple 1 : bande ISM 433 MHz pour les modules et bande ISM 868 MHz pour les concentrateurs intermédiaires.
Exemple 2: bande ISM 868 MHz pour les modules et bande HERMES 169 MHz pour les concentrateurs intermédiaires.
Exemple 3 : bande ISM 868 MHz pour les modules et bande ISM 433 MHz pour les concentrateurs intermédiaires
Exemple 4 : bande ISM 433 MHz pour les modules et bande HERMES 169 MHz pour les concentrateurs intermédiaires.

D'autres modes de réalisation que ceux décrits et représentés peuvent être conçus par l'homme du métier sans sortir du cadre de la présente invention.

## Revendications

1. Procédé de liaison pour télé - relevé de compteurs selon lequel des modules (40-44) connectés à des compteurs communiquent par ondes radiofréquences de façon unidirectionnelle avec un ordinateur central (48) par l'intermédiaire de concentrateurs (45, 46) **caractérisé en ce que**, en plus de la communication unidirectionnelle, une liaison bidirectionnelle entre l'ordinateur, les concentrateurs et les modules est utilisée occasionnellement.

2. Procédé selon la revendication 1 **caractérisé en ce que** ladite communication unidirectionnelle est programmée à des périodes fixes prédéterminées, ladite communication bidirectionnelle pouvant être établie en dehors desdites périodes fixes prédéterminées.

3. Procédé selon la revendication 2 **caractérisé en ce que** les modules (40-44) se positionnent en position d'écoute en dehors desdites périodes fixes prédéterminées.

4. Procédé selon l'une des revendications précédentes, **caractérisé en ce que** la communication bidirectionnelle entre les modules (40-44) et les concentrateurs (45, 46) s'effectue dans une première bande de fréquence et la communication bidirectionnelle entre les concentrateurs (45, 46) et l'ordinateur (48) s'effectue dans une deuxième bande de fréquence différente de la première bande de fréquence.

5. Procédé selon la revendication 4 **caractérisé en ce que** la première bande de fréquence est centrée autour de 433 MHz et la deuxième bande de fréquence est centrée autour de 868 MHz.

6. Procédé selon la revendication 4 **caractérisé en ce que** la première bande de fréquence est centrée autour de 868 MHz et la deuxième bande de fréquence est centrée autour de 169 MHz .

7. Procédé selon la revendication 4 **caractérisé en ce que** la première bande de fréquence est centrée autour de 868 MHz et la deuxième bande de fréquence est centrée autour de 433 MHz .

8. Procédé selon la revendication 4 **caractérisé en ce que** la première bande de fréquence est centrée autour de 433 MHz et la deuxième bande de fréquence est centrée autour de 169 MHz.

9. Procédé selon l'une des revendications précédentes, **caractérisé en ce que** la communication bidirectionnelle n'est utilisée qu'occasionnellement.

10. Procédé selon la revendication 9 **caractérisé en ce que** la communication bidirectionnelle est utilisée principalement pour des opérations de maintenance.

11. Procédé selon l'une des revendications précédentes, **caractérisé en ce que** l'ordinateur central (48) est un ordinateur fixe situé dans les locaux de l'opérateur de télé relevé des compteurs.

12. Procédé selon l'une des revendications précédentes, **caractérisé en ce que** l'ordinateur central est un ordinateur fixe (58) pour la communication unidirectionnelle et est un ordinateur mobile (60) pour la communication bidirectionnelle.
